# EUROPEAN PATENT APPLICATION

(11) **EP 3 761 660 A1**
(43) Date of publication of application: **06.01.2021**
(21) Application number: 18907345.5
(22) Date of filing: 27.12.2018
(51) Int. Cl.: H04R 1/02, G02C 11/00, H04R 1/00, H04R 1/06, H04R 3/00, H04R 25/02

(54) **GLASSES-TYPE ACOUSTIC DEVICE**

(30) Priority: 26.02.2018 JP 2018032378
(71) Applicant: Temco Japan Co., Ltd., Tokyo 168-0062 (JP)
(72) Inventor: TAKEDA, Takeshi, Tokyo 168-0062 (JP); NAKAJO, Sidric T., Tokyo 168-0062 (JP)
(74) Representative: Novagraaf Technologies
(86) International application number: PCT/JP2018/048230
(87) International publication number: WO 2019/163289

(57) **Abstract**

To provide a glasses-type acoustic device which obviates the need for lead wires for transmitting a signal or supplying power between the temple on the right side and the temple on the left side, thereby eliminating the need for a complex wiring, and further, allowing development thereof as commodities having a variety of designs.

The glasses-type acoustic device includes electronic circuits 5 and 6 and sound generating devices 7 and 8, which are incorporated in temples 1 and 2 on the left and right sides, respectively; an electric cell 9 that drives an electronic circuit 5 in the temple on the left side is built in a drop end 3 on the left side; and an electric cell 10 that drives an electronic circuit 6 in the temple on the left side is built in a drop end 4 on the right side.

## Description

### Technical Field

The present invention relates to a glasses-type acoustic device, and more particularly to a glasses-type acoustic device that is in the form of a pair of glasses, and can be used as various modes of acoustic devices, such as a stereo headphone and a hearing aid.

### Background Art

Conventional acoustic devices in a spectacle shape that have an electronic circuit generally have a structure with which there are disposed a power supply part in one of the temples, a circuit part in the other of them, and a speaker on both right and left sides. And most of them have a configuration in which lead wires to transmit a signal or supply power to the speakers on the right and left sides are wired through a frame (for example, refer to Japanese Unexamined Patent Application Publication No. 2015-202196 and Japanese Unexamined Patent Application Publication No. 2008-227806). Consequently, the wiring is intricate, and further the degree of freedom of designing a pair of glasses is limited, thereby development of a glasses-type acoustic device as commodities having a variety of designs being made difficult.

### Citation List

### Patent Literature

Patent Document 1: Japanese Unexamined Patent Application Publication No. 2015-202196
Patent Document 2: Japanese Unexamined Patent Application Publication No. 2008-227806

### Disclosure of the Invention

### Problems to be Solved by the Invention

As described above, conventional acoustic devices in a spectacle shape that have an electronic circuit have presented problems that the lead wires to transmit a signal or supply power between the temple on the right side and the temple on the left side are wired through a frame, thereby the wiring being intricate, and further the degree of freedom of designing a pair of glasses is limited, thereby development of a glasses-type acoustic device as commodities having a variety of designs being made difficult.

In view of such a situation, the present invention has been made, and is intended to provide a glasses-type acoustic device which obviates the need for lead wires for transmitting a signal or supplying power between the temple on the right side and the temple on the left side, thereby eliminating the need for a complex wiring, and further, allowing the glasses-type acoustic device to be developed as commodities having a variety of designs.

### Means for Solving the Problems

The invention according to claim 1 for solving the above problems is a glasses-type acoustic device, including an electronic circuit and a sound generating device, the electronic circuit and the sound generating device being incorporated in respective temples on the right and left sides; an electric cell that drives an electronic circuit in said temple on the right side, the electric cell being built in a drop end on the right side; and an electric cell that drives an electronic circuit in said temple on the left side, the electric cell being built in a drop end on the left side.

In one embodiment, said temple on the right side and said drop end on the right side, and said temple on the left side and said drop end on the left side are configured as components that are independent of each other, respectively; are capable of being jointed to or separated from each other; and are capable of being electrically connected to or disconnected from each other.

In another embodiment, said temples on the right and left sides are adapted to be attachable to or detachable from a frame, respectively.

In another embodiment, said sound generating device is a bone conduction speaker unit. In addition, said drop ends on the right and left sides may have a flexible part in the vicinity of a joint to said temple, the flexible part having a flexibility.

In another embodiment, in said electronic circuit in one temple of said temples on the right and left sides, there is incorporated a main substrate having a circuit for receiving a Blue Tooth (trademark) signal from a piece of external equipment and a radio transmission circuit for separating a signal from the received signal to send it out to another channel, and in said electronic circuit in the other temple, there is incorporated a means for receiving and amplifying the signal sent from said main substrate.

In another embodiment, said electronic circuits in said temples on the right and left sides are hearing aid circuits that are independent of each other, being capable of being set to suit to the hearing abilities on the right and left sides of a user, respectively.

### Advantages of the Invention

As described above, a glasses-type acoustic device in accordance with the present invention has a configuration in which an electronic circuit and a sound generating device are incorporated in respective temples on the right and left sides, and in a drop end on the right side, there is built an electric cell that drives an electronic circuit in the temple on the right side, while, in a drop end on the left side, there is built an electric cell that drives an electronic circuit in the temple on the left side, whereby the need for lead wires to transmit a signal or to supply power between the temple on the right side and the temple on the left side being obviated, and thus an advantage being offered that there is no need for a complex wiring.

In addition, the temple on the right side and the drop end on the right side, and the temple on the left side and the drop end on the left side are adapted to be an independent component, respectively, being configured to be capable of being jointed to or separated from each other, and being electrically connected to or disconnected from each other, and further the temples on the right and left sides are configured to be attachable to or detachable from the frame, respectively, whereby selection and replacement of the frame, temple, and drop end being made possible, and thus an advantage being offered that development of a glasses-type acoustic device as commodities having a variety of designs is allowed.

### Brief Description of the Drawings

Figure 1 is an exploded perspective view showing a glasses-type acoustic device according to one embodiment of the present invention; and
Figure 2 is a schematic configuration drawing of a glasses-type acoustic device according to one embodiment of the present invention.

### Best Mode for Carrying Out the Invention

Hereinbelow, embodiments of the present invention will be explained with reference to the attached drawings.

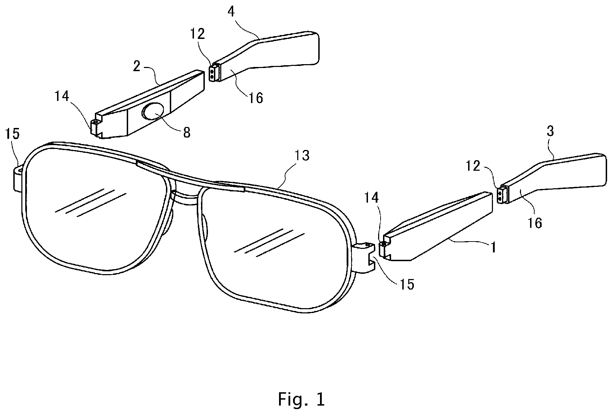

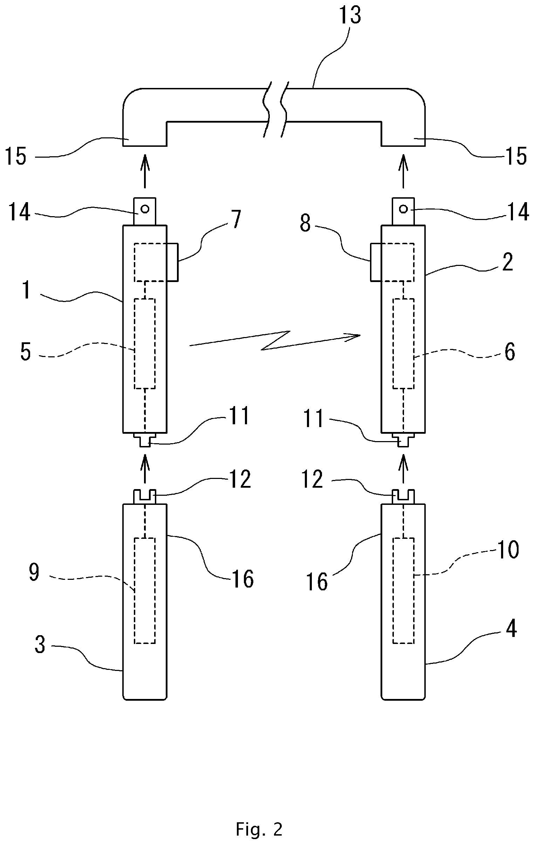

The present invention is a glasses-type acoustic device incorporating a sound generating device in temples of a pair of glasses, and as shown in Figure 1 and Figure 2, an electronic circuit 5 and a sound generating device 7 are built in the temple 1 on the left side, while an electronic circuit 6 and a sound generating device 8 are built in the temple 2 on the right side. In addition, an electric cell 9 for driving an electronic circuit 5 in the temple 1 on the left side is built in a drop end 3 on the left side, and an electric cell 10 for driving an electronic circuit 6 in the temple 2 on the right side is built in a drop end 4 on the right side.

The temple 1 on the left side and the drop end 3 on the left side are independent and separate parts, in other words, parts having replaceability, and they are configured to be able to be jointed to or separated from each other, and able to be electrically connected to or disconnected from each other. Likewise, the temple 2 on the right side and the drop end 4 on the right side are independent and separate parts, in other words, parts having substitutability, and they are configured to be able to be jointed to or separated from each other, and able to be electrically connected to or disconnected from each other.

In order to enable the temple 1 and the drop end 3 to be jointed to or separated from each other and electrically connected to or disconnected from each other, and enable the temple 2 and the drop end 4 to be jointed to or separated from each other and electrically connected to or disconnected from each other, for example, a connector 11 for supplying power to drive the electronic circuit 5 is disposed on the rear end face of the temple 1, a connector 11 for supplying power to drive the electronic circuit 6 being disposed on the rear end face of the temple 2, and a connector 12, which is mated with the connector 11, is disposed on the front end face of the drop ends 3 and 4, which are opposed to the rear end face of the temples 1 and 2, respectively. Moreover, the connectors 11 and 12 are adapted to have a corresponding male and female connector structure, or a pin plug and pin jack structure, whereby the temple 1 and the drop end 3, and the temple 2 and the drop end 4 can be jointed to or separated from each other, respectively.

Further, the temple 1 on the left side and the temple 2 on the right side are configured to be attachable to or detachable from the frame 13, respectively. Still further, as the frame 13, those which have a variety of shapes, those which are made from various materials, or those which are provided with various colors are prepared, while those which are to be used as a sun glass, powered spectacles, or the like, being prepared. The temples 1 and 2 are adapted to be attachable to or detachable from any one of such many and diversified types of frames 13, respectively, such that the user can use an appropriate frame 13 as necessary.

As a configuration that allows the temples 1 and 2 to be attachable to or detachable from the frame 13, the configuration in which a protruding part 14 is formed at the respective ends of the temples 1 and 2, while, in the respective side parts at both ends of the frame 13, a hinging part 15, which grips the protruding part 14, is formed, and from the hinging part 15, a setscrew is inserted through the protruding part 14 is convenient.

In a portion of the respective drop ends 3 and 4, in other words, a portion between the connector 12 and the electric cell housing part, there is disposed a flexible part 16, which has flexibility. By doing so, the drop ends 3 and 4 are made easier to be fitted to the geometry of the head of the user, and it is made possible to secure the intrinsic function of the drop ends 3 and 4 that is to hold the pair of glasses when it is worn.

With the glasses-type acoustic device configured as described above, the temple 1 on the left side and the temple 2 on the right side are each provided with a power supply (an electric cell 9 or 10) to thereby eliminate the need for supplying of power through the frame 13, which is located between the temples 1 and 2, and, since the electronic circuit 5 on the left side and the electronic circuit 6 on the right side can be connected to each other by a radio system, the frame 13 can be separated from the temples 1 and 2, which incorporate the electronic circuit 5 and the sound generating device 7, and the electronic circuit 6 and the sound generating device 8, respectively.

The glasses-type acoustic device in accordance with the present invention is configured as above, and thus it is capable of being used as, for example, a stereo headphone. In this case, in the electronic circuit 5 in the temple 1, which constitutes one of the temples on both sides, a main substrate having a circuit for receiving a Blue Tooth (trademark) signal from a piece of external equipment, and a radio transmission circuit for separating a signal from the received signal to send it out to another channel is incorporated, and in the electronic circuit 6 in the temple 2, which constitutes a pair with the temple 1, a means for receiving and amplifying a signal that is sent from the main substrate is incorporated.

Further, the glasses-type acoustic device in accordance with the present invention can also be used as a hearing aid one. In this case, the electronic circuit 5, which is used as a hearing aid, being incorporated in the temple 1, and the electronic circuit 6, which is used as a hearing aid one, being incorporated in the temple 2, can be each provided with a circuit configuration for hearing aid that is independent of the same on the other side, whereby the characteristics and the sensitivity of the electronic circuits 5 and 6 can be set and adjusted more finely to the user's hearing abilities on the left or right side, respectively.

The features of the glasses-type acoustic device in accordance with the present invention include:
1) Since the frame 13 is independent of the temples 1 and 2, the degree of freedom of design is high, and further, each of the drop ends 3 and 4 is adapted to be replaceable, which means that the electric cells 9 and 10 can be prepared as a spare, respectively, whereby a time loss that could be caused by charging the electric cell can be avoided.
2) Each particular component can be freely replaced with another same component by the purchaser, whereby the purchaser can use an appropriate glasses-type acoustic device in accordance with a variety of situations.
3) It is applicable to a stereo headphone, a hearing aid, and the like, and in case where it is used as a hearing aid, the characteristics and sensitivity can be set and adjusted to the respective hearing abilities of the user on the right and left sides.
4) Since the electric cell housing parts (the drop ends 3 and 4) are separable from the main body, separation disposal thereof that is needed in scrapping the product can be easily conducted.

### Industrial Applicability

The glasses-type acoustic device in accordance with the present invention has a number of features as described above, and thus it provides a high industrial applicability.

## Claims

1. A glasses-type acoustic device, comprising an electronic circuit and a sound generating device, the electronic circuit and the sound generating device being incorporated in respective temples on the right and left sides; an electric cell that drives an electronic circuit in said temple on the right side, the electric cell being built in a drop end on the right side; and an electric cell that drives an electronic circuit in said temple on the left side, the electric cell being built in a drop end on the left side.

2. The glasses-type acoustic device according to claim 1, wherein said temple on the right side and said drop end on the right side, and said temple on the left side and said drop end on the left side are configured as components that are independent of each other, respectively; are capable of being jointed to or separated from each other; and are capable of being electrically connected to or disconnected from each other.

3. The glasses-type acoustic device according to claim 1 or 2, wherein said temples on the right and left sides are attachable to or detachable from a frame, respectively.

4. The glasses-type acoustic device according to any one of 1 to 3, wherein said sound generating device is a bone conduction speaker unit.

5. The glasses-type acoustic device according to any one of claims 1 to 4, wherein said drop ends on the right and left sides have a flexible part in the vicinity of a joint to said temple, the flexible part having a flexibility.

6. The glasses-type acoustic device according to any one of claims 1 to 5, wherein, in said electronic circuit in one temple of said temples on the right and left sides, there is incorporated a main substrate having a circuit for receiving a Blue Tooth (trademark) signal from a piece of external equipment and a radio transmission circuit for separating a signal from the received signal to send it out to another channel, and in said electronic circuit in the other temple, there is incorporated a means for receiving and amplifying the signal sent from said main substrate.

7. The glasses-type acoustic device according to any one of claims 1 to 5, wherein said electronic circuits in said temples on the right and left sides are hearing aid circuits that are independent of each other, being capable of being set to suit to the hearing abilities on the right and left sides of a user, respectively.
